# EUROPÄISCHE PATENTSCHRIFT

(11) **EP 2 144 811 B1**
(45) Veröffentlichungstag und Bekanntmachung des Hinweises auf die Patenterteilung: **14.09.2011**
(21) Anmeldenummer: 08748717.9
(22) Anmeldetag: 29.03.2008
(51) Int. Cl.: B64D 27/24

(54) **LUFTFAHRZEUG**
AIRCRAFT
AÉRONEF

(30) Priorität: 11.04.2007 DE 102007017332
(43) Veröffentlichungstag der Anmeldung: 20.01.2010
(73) Patentinhaber: Flight-Design-GmbH Flugsportgeräte, 70771 Leinfelden-Echterdingen (DE)
(72) Erfinder: REINHARDT, Oliver, 70176 Stuttgart (DE)
(74) Vertreter: Laufhütte, Dieter
(86) Internationale Anmeldenummer: PCT/DE2008/000543
(87) Internationale Veröffentlichungsnummer: WO 2008/125077

(56) Entgegenhaltungen:
- BE-A6- 1 012 040
- DE-A1- 10 156 868
- FR-A- 2 883 805
- US-A- 4 165 795
- US-A- 4 605 185
- US-A- 6 040 634
- US-A1- 2004 211 862
- US-A1- 2007 012 492

## Beschreibung

Die Erfindung betrifft ein Luftfahrzeug, mit einem Verbrennungsmotor, durch dessen Antriebsleistung ein Propeller antreibbar ist.

Bei Flugzeugen, die durch einen Verbrennungsmotor angetrieben werden, kommen zumeist Ottomotoren, Dieselmotoren oder Zweitaktmotoren zum Einsatz. In bestimmten Flugphasen werden diese Verbrennungsmotoren mit erhöhter Leistung betrieben. Die dabei erzeugte Überschussleistung wird beispielsweise beim Start des Luftfahrzeugs oder in der sich an den Start anschließenden sicherheitskritischen Steigphase benötigt. Der Verbrennungsmotor wird dabei allerdings mit besonders hoher Drehzahl und Belastung betrieben, wodurch sich der Verschleiß überproportional erhöht.

Daneben sind Flugzeuge bekannt, die ausschließlich durch einen Elektromotor angetrieben werden. In der DE 195 12 816 A1 wird ein Segelflugzeug mit Hilfsmotor vorgeschlagen, der als Elektromotor ausgebildet ist, wobei die Energieversorgung des Elektromotors durch eine in den Tragflächen angeordnete Batterieeinrichtung sichergestellt wird.

Wenn bei einem herkömmlichen Flugzeug mit einem Verbrennungsmotor eine erhöhte Antriebsleistung erforderlich ist, war es bisher erforderlich, einen Verbrennungsmotor mit größerer Leistung einzusetzen. Die dadurch bedingte Gewichtszunahme führte jedoch zu höheren Anforderungen an die Flugzeugstruktur und damit zu einem erhöhten Gesamtgewicht.

US 2007/012492 A1 betrifft ein Antriebssystem für ein hybrides elektrisches Fahrzeug mit einer elektrischen Maschine und einem Motor, wobei in einer ersten Betriebsart die elektrische Maschine als Elektromotor und in einer zweiten Betriebsart als Generator betreibbar ist.

Der Erfindung liegt daher das Problem zu Grunde, ein Luftfahrzeug anzugeben, das eine erhöhte Antriebsleistung zur Verfügung stellen kann, ohne dass sich dadurch die Masse des Antriebs signifikant erhöht.

Zur Lösung dieser Aufgabe wird ein Luftfahrzeug gemäß Anspruch 1 und ein Verfahren gemäß Anspruch 15 vorgesehen.

Der Erfindung liegt die Erkenntnis zu Grunde, dass der Elektromotor mit der elektrischen Maschine zu einem Hybridmotor kombiniert werden kann, um den Verbrennungsmotor zu unterstützen und in bestimmten Betriebszuständen eine erhöhte Antriebsleistung zur Verfügung stellen kann. Die elektrische Maschine kommt primär lediglich während kurzer Flugphasen zum Einsatz, etwa beim Start oder beim Steigflug und liefert dann einen sicherheitsrelevanten Leistungsüberschuss. Dabei wird es bevorzugt, dass die zusätzliche Antriebsleistung etwa 15 % - 35 %, vorzugsweise 20 %, der Leistung des Verbrennungsmotors beträgt. Die durch die elektrische Maschine und gegebenenfalls weitere erforderliche Komponenten verursachte Massezunahme liegt jedoch deutlich unterhalb der Massezunahme beim Einsatz eines leistungsstärkeren Verbrennungsmotors. Wenn die zusätzliche Leistung nicht mehr benötigt wird, wird die elektrische Maschine ausgeschaltet oder in die zweite Betriebsart umgeschaltet und wirkt dann als elektrischer Generator. Die elektrische Maschine ist mit wenigstens einem Akkumulator als Energiespeicher verbunden, der die während des elektromotorischen Betriebs benötigte Energie zur Verfügung stellt und in der zweiten Betriebsart während des generatorischen Betriebs aufladbar ist. Nach dem Abschluss des Ladevorgangs kann die zusätzliche Antriebsleistung erneut abgerufen werden. Dadurch ergibt sich der Vorteil, dass der Verbrennungsmotor im Reiseflug effizienter belastet wird, wodurch sich der Kraftstoffverbrauch durch eine günstigere Auslegung des Verbrennungsmotors verringert.

Vorzugsweise weist das erfindungsgemäße Luftfahrzeug zwei oder mehr Akkumulatoren auf, die in den Tragflügeln angeordnet sind. Dadurch ergibt sich eine günstigere Massenverteilung des Luftfahrzeugs, so dass die Flugzeugstruktur leichter gestaltet werden kann, was wiederum zu einem verringerten Leistungsbedarf und einem reduzierten Kraftstoffverbrauch führt.

Ein weiterer Vorteil ergibt sich bei dem erfindungsgemäßen Luftfahrzeug, wenn der wenigstens eine Akkumulator die Energie für die Bordstromversorgung des Luftfahrzeugs bereitstellt. In diesem Fall kann ein separater Akkumulator entfallen, wodurch sich die Masse des Luftfahrzeugs weiter reduziert.

Gemäß einer Weiterbildung der Erfindung kann es vorgesehen sein, dass die elektrische Maschine zum Anlassen des Verbrennungsmotors ausgebildet ist. Die elektrische Maschine dient dann als Startergenerator, so dass ein separater Elektromotor als Anlasser entfallen kann, wodurch sich eine weitere Reduzierung der Masse des Antriebs ergibt.

Bei dem erfindungsgemäßen Luftfahrzeug kann die elektrische Maschine starr oder über eine Kupplung mit der Kurbelwelle des Verbrennungsmotors verbunden sein. Wenn eine Kupplung vorhanden ist, wird die elektrische Maschine mit besonderem Vorteil nur dann mit dem Verbrennungsmotor verbunden, wenn es erforderlich ist, das heißt wenn die elektrische Maschine als Elektromotor betrieben wird und die erhöhte Leistung zur Verfügung stellt oder alternativ wenn die elektrische Maschine als Generator betrieben wird und den Akkumulator lädt. In allen anderen Flugzuständen kann die elektrische Maschine ausgekoppelt sein, so dass sie den Verbrennungsmotor nicht belastet. Es sind jedoch auch Ausführungen denkbar, bei denen die elektrische Maschine starr mit der Kurbelwelle des Verbrennungsmotors verbunden ist. Die elektrische Maschine wirkt dabei als zusätzliche Schwungmasse, die bei geeigneter Auslegung zu einem ruhigeren Lauf des Verbrennungsmotors führt. Dementsprechend können zusätzliche Schwungmassen, die bei herkömmlichen Verbrennungsmotoren verwendet werden, entfallen.

Gemäß einer ersten Ausgestaltung der Erfindung kann es vorgesehen sein, dass die elektrische Maschine an dem dem Propeller entgegengesetzten Ende der Kurbelwelle angeordnet ist. Gemäß einer alternativen Ausgestaltung kann es jedoch auch vorgesehen sein, dass die elektrische Maschine zwischen Propeller und Verbrennungsmotor an der Kurbelwelle angeordnet ist. Gegebenenfalls kann die elektrische Maschine über ein Propellergetriebe oder ein separates Getriebe oder über einen Riementrieb an die Kurbelwelle gekoppelt oder koppelbar sein.

Es wird besonders bevorzugt, dass das erfindungsgemäße Luftfahrzeug eine Steuerungseinheit aufweist, die einen Vergaser oder eine Einspritzanlage des Verbrennungsmotors und eine Lade- und Leistungselektronik für die elektrische Maschine steuert. Mit der Leistungselektronik wird die Ansteuerung der elektrischen Maschine während des Betriebs als Elektromotor bewerkstelligt. Die Ladenelektronik kann zusätzlich eine Vorrichtung zur Überwachung des Zustands des Akkumulators aufweisen.

Eine besonders einfache Bedienung des erfindungsgemäßen Luftfahrzeugs ergibt sich, wenn die Steuerungseinheit durch ein vorzugsweise als Einhebelbedienung ausgebildetes Bedienelement bedienbar ist. Durch den Piloten wird dabei lediglich in herkömmlicher Weise ein Leistungshebel bedient, die Steuerung der elektrischen Maschine, insbesondere das Ein- oder Ausschalten der ersten Betriebsart als Elektromotor sowie das Ein- und Ausschalten der zweiten Betriebsart als Generator wird dabei automatisch von der Steuerungseinheit vorgenommen, insbesondere in Abhängigkeit der Stellung des Bedienelements, vorzugsweise des Leistungshebels. Die Steuerung und Umschaltung erfolgt automatisch und damit ohne Zutun des Piloten, wodurch Fehlbedienungen ausgeschlossen werden.

Die Erfindung kann bei allen Luftfahrzeugen eingesetzt werden, die durch einen Verbrennungsmotor angetrieben werden, insbesondere kann sie bei Motorflugzeugen, Ultraleichtflugzeugen, Trikes, Motorseglern und Segelflugzeugen mit Hilfsmotor eingesetzt werden, daneben ist sie auch für solche Luftfahrzeuge geeignet, die als Light Sport Aircraft (LSA) oder Very Light Aircraft (VLA) zugelassen sind.

Weitere Vorteile und Einzelheiten der Erfindung werden anhand eines Ausführungsbeispiels unter Bezugnahme auf die Figuren erläutert. Die Figuren sind schematische Darstellungen und zeigen:
- Fig. 1: ein Blockschaltbild der wesentlichen Komponenten des Antriebs ei- nes erfindungsgemäßen Luftfahrzeugs;
- Fig. 2: eine Draufsicht eines Ausführungsbeispiels eines erfindungsgemä- ßen Luftfahrzeugs; und
- Fig. 3: eine Seitenansicht des Luftfahrzeugs von Fig. 2.

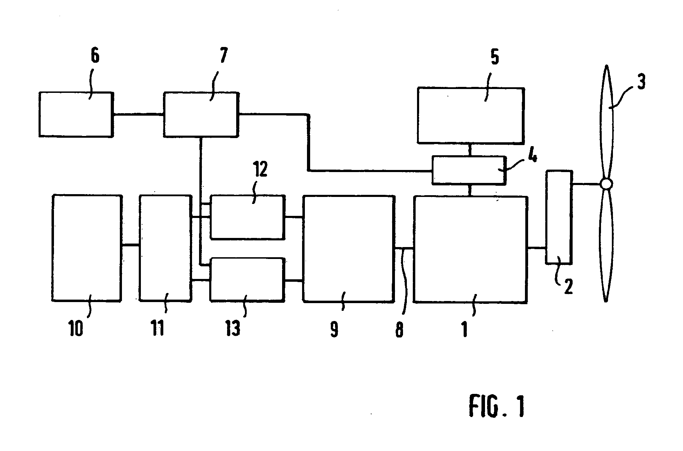

Fig. 1 zeigt die wesentlichen Komponenten des Antriebs eine erfindungsgemäßen Luftfahrzeugs. Ein Verbrennungsmotor 1 ist in herkömmlicher Weise über ein Propellergetriebe 2 mit einem Propeller 3 verbunden. An den Verbrennungsmotor 1 ist ein Vergaser 4 oder alternativ eine Einspritzung angeschlossen, die Versorgung mit Kraftstoff erfolgt über einen Tank 5. Im Cockpit des Luftfahrzeugs befindet sich ein Leistungshebel 6, der vom Piloten je nach dem gewünschten Leistungsbedarf bedient wird. Der Leistungshebel 6 ist an eine Steuerungseinheit 7 angeschlossen, die wiederum mit dem Vergaser 4 bzw. der Einspritzung verbunden ist. Die Steuerungseinheit 7 steuert in Abhängigkeit der Position des Leistungshebels 6 den Betrieb des Verbrennungsmotors 1 durch Steuerung des Vergasers 4 oder der Einspritzung.

Anders als bei herkömmlichen Verbrennungsmotoren ist an dem dem Propeller 3 gegenüberliegenden Ende der in Fig. 1 schematisch dargestellten Kurbelwelle 8 des Verbrennungsmotors 1 eine elektrische Maschine 9 angeschlossen. Der Anschluss erfolgt dabei über eine in Fig. 1 nicht dargestellte Kupplung, so dass die elektrische Maschine 9 entweder mit der Kurbelwelle 8 gekoppelt oder von dieser abgekoppelt ist. Die elektrische Maschine 9 kann in einer ersten Betriebsart als Elektromotor betrieben werden. Dabei treibt sie die Kurbelwelle 8 an, so dass insgesamt eine erhöhte Antriebsleistung an den Propeller 3 abgegeben werden kann. Wenn die elektrische Maschine 9 als Elektromotor betrieben wird, erhält sie die benötigte Energie von einem Akkumulator 10. In Fig. 1 ist der Akkumulator 10 lediglich schematisch dargestellt, vorzugsweise sind mehrere Akkumulatoren vorgesehen, wobei in jedem Tragflügel zumindest ein Akkumulator angeordnet ist. Der Akkumulator 10 ist an eine Einheit zu Akkumulatorüberwachung 11 angeschlossen, die mit einer Leistungselektronik 12 und einer Ladeelektronik 13 verbunden ist. Die zuvor erwähnte Steuerungseinheit 7 ist ebenfalls mit der Leistungselektronik 12 und der Ladeelektronik 13 verbunden.

In der ersten Betriebsart, wenn die elektrische Maschine 9 als Elektromotor betrieben wird, wird durch die Leistungselektronik 12 die benötigte Energie von dem Akkumulator 10 bereitgestellt. Wenn die elektrische Maschine 9 als Elektromotor betrieben wird, gibt der Antrieb eine erhöhte Spitzenleistung ab, ohne dass der Verbrennungsmotor 1 überlastet wird. Diese erhöhte Spitzenleistung wird beispielsweise beim Start oder während der sicherheitskritischen Steigphase benötigt. Im Anschluss daran wird der Pilot über den Leistungshebel 6 eine geringere Leistung wählen. Über die Steuerungseinheit 7 wird die geänderte Stellung des Leistungshebels 6 registriert und die elektrische Maschine 9 wird nicht weiter in der ersten Betriebsart als Elektromotor betrieben. Entweder wird die elektrische Maschine mittels der an der Kurbelwelle 8 angeordneten Kupplung vom Verbrennungsmotor abgekoppelt oder die elektrische Maschine 9 wird in die zweite Betriebsart umgeschaltet, in der sie als elektrischer Generator betrieben wird. Im generatorischen Betrieb wird die elektrische Maschine 9 von der durch den Verbrennungsmotor 1 angetriebenen Kurbelwelle 8 angetrieben. Über die Ladeelektronik 13 und die Einrichtung 11 zur Überwachung des Akkumulators wird die Aufladung des Akkumulators 10 gesteuert. Wenn der Akkumulator 10 einen definierten Ladezustand erreicht hat, kann die elektrische Maschine 9 ausgeschaltet bzw. von der Kurbelwelle 8 abgekoppelt werden.

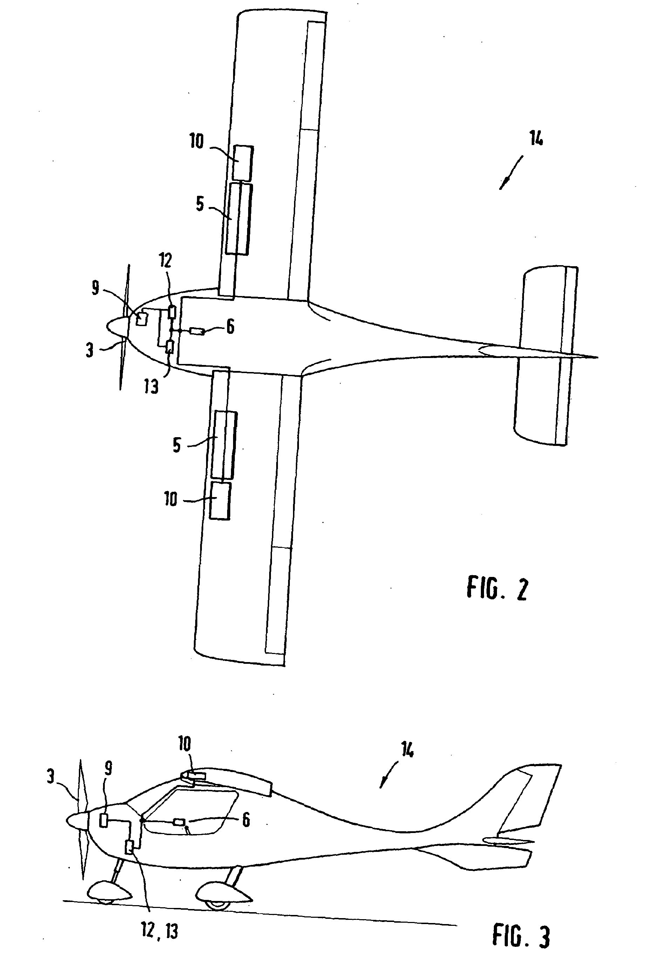

Die Fig. 2 und 3 zeigen das Luftfahrzeug 14 in einer Draufsicht und einer Seitenansicht. Wie am besten in Fig. 2 zu sehen ist, befindet sich im Inneren jedes Tragflügels vor dem Flügelholm neben den Tanks 5 ein Akkumulator 10. Der Verbrennungsmotor und die elektrische Maschine 9 befinden sich in der Flugzeugschnauze und treiben den Propeller 3 an. Die Leistungselektronik 12 und die Ladeelektronik 13 sind in der Nähe der elektrischen Maschine 9 angeordnet. Der Leistungshebel 6 befindet sich im Cockpit.

Der Akkumulator 10 dient gleichzeitig zur Bordstromversorgung des Luftfahrzeugs 14. Die elektrische Maschine 9 dient auch zum Anlassen des Verbrennungsmotors 1, ein separater Anlasser ist nicht vorhanden.

## Patentansprüche

1. Luftfahrzeug, mit einem Verbrennungsmotor, durch dessen Antriebsleistung ein Propeller antreibbar ist, wobei der Verbrennungsmotor (1) mit einer elektrischen Maschine (9) zusammenwirkt, die in einer ersten Betriebsart als Elektromotor und in einer zweiten Betriebsart als elektrischer Generator betreibbar ist,
**dadurch gekennzeichnet,**
**dass** die elektrische Maschine (9) während des elektromotorischen Betriebs eine zusätzliche Antriebsleistung für den Propeller (3) zur Unterstützung des Verbrennungsmotors (1) zur Verfügung stellt und hierdurch die Spitzenleistung des Antriebs erhöht.

2. Luftfahrzeug nach Anspruch 1, **dadurch gekennzeichnet, dass** die zusätzliche Antriebsleistung 15 bis 35 %, vorzugsweise 20 %, der Nennleistung des Verbrennungsmotors (1) beträgt.

3. Luftfahrzeug nach einem der vorangehenden Ansprüche, **dadurch gekennzeichnet, dass** die elektrische Maschine (9) mit wenigstens einem Akkumulator (10) als Energiespeicher verbunden ist, der die während des elektromotorischen Betriebs benötigte Energie zur Verfügung stellt und/oder während des generatorischen Betriebs aufladbar ist.

4. Luftfahrzeug nach Anspruch 3, **dadurch gekennzeichnet, dass** es wenigstens zwei Akkumulatoren (10) aufweist, die in den Tragflügeln angeordnet sind.

5. Luftfahrzeug nach Anspruch 3 oder 4, **dadurch gekennzeichnet, dass** der wenigstens eine Akkumulator (10) die Energie für die Bordstromversorgung des Luftfahrzeugs (14) bereitstellt.

6. Luftfahrzeug nach einem der vorangehenden Ansprüche, **dadurch gekennzeichnet, dass** die elektrische Maschine (9) zum Anlassen des Verbrennungsmotors (1) ausgebildet ist.

7. Luftfahrzeug nach einem der vorangehenden Ansprüche, **dadurch gekennzeichnet, dass** die elektrische Maschine (9) starr oder über eine Kupplung mit der Kurbelwelle (8) des Verbrennungsmotors (1) verbunden ist.

8. Luftfahrzeug nach Anspruch 7, **dadurch gekennzeichnet, dass** die elektrische Maschine (9) an dem dem Propeller (3) entgegengesetzten Ende der Kurbelwelle (8) angeordnet ist.

9. Luftfahrzeug nach Anspruch 7, **dadurch gekennzeichnet, dass** die elektrische Maschine an der Kurbelwelle zwischen Propeller und Verbrennungsmotor angeordnet ist.

10. Luftfahrzeug nach Anspruch 8 oder 9, **dadurch gekennzeichnet, dass** die elektrische Maschine (9) über ein Propellergetriebe (2) oder über ein separates Getriebe oder über einen Riementrieb an die Kurbelwelle (8) gekoppelt oder koppelbar ist.

11. Luftfahrzeug nach einem der vorangehenden Ansprüche, **dadurch gekennzeichnet, dass** es eine Steuerungseinheit (7) aufweist, die einen Vergaser (4) oder eine Einspritzanlage des Verbrennungsmotors (1) und eine Lade- und Leistungselektronik (12, 13) für die elektrische Maschine (9) steuert.

12. Luftfahrzeug nach Anspruch 11, **dadurch gekennzeichnet, dass** die Steuerungseinheit (7) durch ein vorzugsweise als Einhebelbedienung ausgebildetes Bedienelement bedienbar ist.

13. Luftfahrzeug nach Anspruch 11 oder 12, **dadurch gekennzeichnet, dass** die Steuerungseinheit (7) zum automatischen Umschalten zwischen dem elektromotorischen Betrieb und dem generatorischen Betrieb ausgebildet ist, insbesondere in Abhängigkeit der Stellung des Bedienelements.

14. Luftfahrzeug nach einem der vorangehenden Ansprüche, **dadurch gekennzeichnet, dass** das Luftfahrzeug (14) als Motorflugzeug, Ultraleichtflugzeug, Trike, Motorsegler, Segelflugzeug mit Hilfsmotor, Light Sport Aircraft (LSA) oder Very Light Aircraft (VLA) ausgebildet ist.

15. Verfahren zum Betrieb eines Luftfahrzeuges nach einem der vorangegangenen Ansprüche und/oder Verwendung eines Luftfahrzeuges nach einem der vorangegangenen Ansprüche, wobei der Elektromotor den Verbrennungsmotor während des Startes und/oder beim Steigflug unterstützt.

## Claims

1. An aircraft having an internal combustion engine by whose driving power a propeller can be driven, wherein the internal combustion engine (1) cooperates with an electric machine (9) which can be operated as an electric motor in a first operating mode and as an electric generator in a second operating mode,
**characterised in that**
the electric machine (9) provides an additional driving power for the propeller (3) to support the internal combustion engine (1) during operation as an electric motor and hereby increases the peak performance of the drive.

2. An aircraft in accordance with claim 1, **characterised in that** the additional driving power amounts to 15 to 35%, preferably 20%, of the rated power of the internal combustion engine (1).

3. An aircraft in accordance with one of the preceding claims, **characterised in that** the electric machine (9) is connected to at least one accumulator (10) as an energy store which provides the energy required during operation as an electric motor and/or can be charged during operation as a generator.

4. An aircraft in accordance with claim 3, **characterised in that** it has at least two accumulators (10) which are arranged in the aerofoils.

5. An aircraft in accordance with either of claims 3 or 4, **characterised in that** the at least one accumulator (10) provides the energy for the on-board power supply of the aircraft (14).

6. An aircraft in accordance with one of the preceding claims, **characterised in that** the electric machine (9) is designed to start the internal combustion engine (1).

7. An aircraft in accordance with one of the preceding claims, **characterised in that** the electric machine (9) is connected to the crankshaft (8) of the internal combustion engine (1) rigidly or via a coupling.

8. An aircraft in accordance with claim 7, **characterised in that** the electric machine (9) is arranged at the end of the crankshaft (8) opposite the propeller (3).

9. An aircraft in accordance with claim 7, **characterised in that** the electric machine is arranged at the crankshaft between the propeller and the internal combustion engine.

10. An aircraft in accordance with either of claims 8 or 9, **characterised in that** the electric machine (9) is or can be coupled to the crankshaft (8) via a propeller transmission (2) or via a separate transmission or via a belt drive.

11. An aircraft in accordance with one of the preceding claims, **characterised in that** it has a control unit (7) which controls a carburettor (4) or a fuel-injection system of the internal combustion engine (1) and charge or power electronics (12, 13) for the electric machine (9).

12. An aircraft in accordance with claim 11, **characterised in that** the control unit (7) is operable by a control element preferably designed as a single-lever operating element.

13. An aircraft in accordance with either of claims 11 or 12, **characterised in that** the control unit (7) is designed for the automatic switching over between operation as an electric motor and operation as a generator, in particular in dependence on the position of the control element.

14. An aircraft in accordance with one of the preceding claims, **characterised in that** the aircraft (14) is designed as a motorised aircraft, a microlight, a trike, a power glider, a glider having an auxiliary engine, a light sport aircraft (LSA) or a very light aircraft (VLA).

15. A method of operating an aircraft in accordance with one of the preceding claims and/or use of an aircraft in accordance with one of the preceding claims, wherein the electric motor assists the internal combustion engine during the start and/or on the ascent.

## Revendications

1. Aéronef, avec un moteur à combustion, dont la puissance de propulsion permet de propulser une hélice, le moteur à combustion (1) concourant avec une machine électrique (9), qui peut fonctionner dans un premier mode de service comme moteur électrique, et dans un deuxième mode de service comme générateur électrique,
**caractérisé en ce que**,
la machine électrique (9), pendant le fonctionnement électromoteur, met à disposition une puissance de propulsion supplémentaire pour l'hélice (3) afin de soutenir le moteur à combustion (1), augmentant ainsi la puissance maximale de la propulsion.

2. Aéronef selon la revendication 1, **caractérisé en ce que** la puissance de propulsion supplémentaire s'élève à 15 à 35 %, de préférence à 20 % de la puissance nominale du moteur à combustion (1).

3. Aéronef selon une quelconque des revendications précédentes, **caractérisé en ce que** la machine électrique (9) est reliée avec au moins un accumulateur (10) comme réservoir d'énergie, qui met à disposition l'énergie nécessitée pendant le mode électromoteur et/ou est rechargeable pendant le mode générateur.

4. Aéronef selon la revendication 3, **caractérisé en ce qu'**il présente au moins deux accumulateurs (10), qui sont disposés sur les ailes portantes.

5. Aéronef selon la revendication 3 ou 4, **caractérisé en ce qu'**au moins l'un des accumulateurs (10) fournit l'énergie pour l'alimentation électrique de bord de l'aéronef (14).

6. Aéronef selon une quelconque des revendications précédentes, **caractérisé en ce que** la machine électrique (9) est construite pour démarrer le moteur à combustion (1).

7. Aéronef selon une quelconque des revendications précédentes, **caractérisé en ce que** la machine électrique (9) est reliée de manière rigide ou via un coupleur au vilebrequin (8) du moteur à combustion (1).

8. Aéronef selon la revendication 7, **caractérisé en ce que** la machine électrique (9) est disposée à l'extrémité du vilebrequin (8) opposée à l'hélice (3).

9. Aéronef selon la revendication 7, **caractérisé en ce que** la machine électrique est disposée sur le vilebrequin entre l'hélice et le moteur à combustion.

10. Aéronef selon la revendication 8 ou 9, **caractérisé en ce que** la machine électrique (9) est couplée ou couplable au vilebrequin (8) via un engrenage d'hélice (2), via un engrenage séparé ou via une transmission par courroie.

11. Aéronef selon une quelconque des revendications précédentes, **caractérisé en ce qu'**il présente une unité de commande (7), qui commande un carburateur (4) ou un système d'injection du moteur à combustion (1) et un système électronique de chargement et de puissance (12, 13) pour la machine électrique (9).

12. Aéronef selon la revendication 11, **caractérisé en ce que** l'unité de commande (7) est manoeuvrable par une manette construite de préférence comme commande à un seul levier.

13. Aéronef selon la revendication 11 ou 12, **caractérisé en ce que** l'unité de commande (7) est construite pour la commutation automatique entre le mode électromoteur et le mode générateur, notamment en fonction de la position de la manette.

14. Aéronef selon une quelconque des revendications précédentes, **caractérisé en ce que** l'aéronef (14) est construit comme avion à moteur, comme avion superléger, comme avion à train tricycle, comme motoplaneur, comme planeur à moteur auxiliaire, comme avion sportif léger ou comme avion ultraléger (ULM).

15. Procédé destiné au fonctionnement d'un aéronef selon une quelconque des revendications précédentes et/ou à l'utilisation d'un aéronef selon une quelconque des revendications précédentes, le moteur électrique soutenant le moteur à combustion pendant le démarrage et/ou pendant le vol ascendant.
